# EUROPÄISCHE PATENTSCHRIFT

(11) **EP 1 409 302 B1**
(45) Veröffentlichungstag und Bekanntmachung des Hinweises auf die Patenterteilung: **28.09.2005**
(21) Anmeldenummer: 02791458.9
(22) Anmeldetag: 17.07.2002
(51) Int. Cl.: B60R 21/20

(54) **ANORDNUNG ZUR INNENAUSSTATTUNG EINES KRAFTFAHRZEUGS UND VERFAHREN ZU DEREN HERSTELLUNG**
INNER FITTING ARRANGEMENT OF A MOTOR VEHICLE AND METHOD FOR THE PRODUCTION THEREOF
CONCEPTION D'AMENAGEMENT INTERIEUR D'UN VEHICULE AUTOMOBILE ET SON MODE DE REALISATION

(30) Priorität: 24.07.2001 DE 10135224
(43) Veröffentlichungstag der Anmeldung: 21.04.2004
(60) Teilanmeldung: 05002241.7
(73) Patentinhaber: Intier Automotive Eybl Interiors GmbH, 94315 Straubing (DE)
(72) Erfinder: KUSEBAUCH, Rolf, H., 94345 Obermotzing (DE); CHRISTOPH, Erich, 63179 Obertshausen (DE); BÖLLER, Manfred, 93492 Treffelstein (DE)
(86) Internationale Anmeldenummer: PCT/EP2002/007928
(87) Internationale Veröffentlichungsnummer: WO 2003/011656

(56) Entgegenhaltungen:
- EP-A- 1 106 445
- DE-A- 4 442 202
- DE-A- 19 926 518
- DE-A- 19 948 125
- DE-A- 19 949 170
- FR-A- 2 799 700

## Beschreibung

Die Erfindung betrifft eine Anordnung zur Innenausstattung eines Kraftfahrzeugs, insbesondere eine mit einem Beifahrerairbagmodul versehene Instrumententafel und ein Verfahren zu deren Herstellung nach dem Oberbegriff des Patentanspruchs 1 bzw. 23.

Eine derartige Anordnung und ein derartiges Verfahren sind aus DE 19949170A und DE 19948125A bekannt.

Bei bekannten Instrumententafeln ist das Airbagmodul üblicherweise hinter dem Trägerteil an einem Fahrzeugquerträger befestigt und dazu ausgebildet, den Gassack über einen Schusskanal mit hoher Entfaltungsgeschwindigkeit durch eine Aufreißpartie der Instrumententafel hindurch in den Fahrgastraum zu entfalten. Hierzu wird das flächig geschlossene Trägerteil mit Ausfräsungen versehen, welche eine Sollbruchlinie definieren. Problematisch hierbei ist, dass eine gewisse Festigkeit gegen fahrgastseitig auf die Instrumententafel ausgeübte Druckbelastungen im Normalbetrieb gewährleistet sein muss, wodurch umgekehrt auch die Durchbrechfestigkeit gegenüber dem Airbag definiert wird. Dies bedingt, dass ein herkömmlich gefalteter Gassack über einen engen Schusskanal mit vergleichsweise großer Energie entfaltet wird, um den vorgesehenen Materialbruch an der Sollbruchlinie zu gewährleisten, was besonders bei einer Fehlpositionierung des Beifahrers zu einer ungewollten Gefährdung führen kann. Ein weiterer Nachteil eines tief hinter das Trägerteil greifenden Airbagmoduls liegt in dem verlorenen Bauraum für Einbauten wie das Handschuhfach.

Um hier Abhilfe zu schaffen, wurde bereits vorgeschlagen, zumindest den Gassack der Airbagvorrichtung als Faltpaket im Zwischenbereich zwischen dem Trägerteil und der Dekorhaut zu integrieren. Auch hierbei wird der Airbag unsichtbar eingebaut und es muss der Forderung genügt werden, dass sich zu keiner Zeit auch bei extremen klimatischen Beanspruchungen irgendwelche sichtseitigen Veränderungen auf der Instrumententafel abzeichnen. Ein weiteres Problem dieser Bauform liegt darin, dass die Funktionssicherheit des Airbags nachträglich nur schwer überprüft werden kann, da er unzugänglich in der Instrumententafel eingeschäumt ist. Aus Sicherheitsgründen kann es erforderlich sein, den explosiv arbeitenden Gasgenerator erst in einer späten Stufe der Fahrzeugassemblierung gesondert anzubringen, was den Fertigungsprozess und die Möglichkeiten zur Funktionsprüfung erheblich beeinträchtigt.

Ausgehend hiervon besteht die Aufgabe der Erfindung darin, die vorstehend geschilderten Nachteile zu vermeiden und eine Anordnung und ein Verfahren der eingangs angegebenen Art dahingehend zu verbessern, dass eine hohe Funktionssicherheit gewährleistet ist, die Herstellung vereinfacht wird und bei kompakter Bauform keine störenden Veränderungen an der Innenausstattung auftreten.

Zur Lösung dieser Aufgabe wird die im Patentanspruch 1 bzw. 23 angegebene Merkmalskombination angegeben. Vorteilhafte Ausgestaltungen und Weiterbildungen der Erfindung ergeben sich aus den abhängigen Ansprüchen.

In vorrichtungsmäßiger Hinsicht wird nach der Erfindung vorgeschlagen, dass das Trägerteil eine Durchlassöffnung für den Gassack aufweist, und dass die Durchlassöffnung durch ein an ihrem Öffnungsrand abgestütztes vorgefertigtes Verschlussteil gegenüber der Zwischenschicht abgedeckt ist. Damit wird das Ausschäumen der Zwischenschicht frei von dem Airbagmodul möglich, welches somit beim Schäumvorgang auch nicht beschädigt wird. Das Verschlussteil kann dem Schäumdruck ohne störende Kompressionsvorgänge standhalten, und es wird eine dauerhaft konturstabile Abstützung der Zwischenschicht und Dekorhaut erreicht. Zugleich ermöglicht das Verschlussteil einen großflächigen Durchlass des Gassacks mit geringem Entfaltungsdruck und ohne wesentliche Beeinträchtigung der Strukturstabilität.

Vorteilhafterweise ist das Airbagmodul als komplette Baueinheit an dem Trägerteil des vorgefertigten Innenausstattungsteils angeflanscht, so dass eine unabhängige Airbagmontage als vorgeprüfte Einheit und gegebenenfalls ein nachträglicher Austausch möglich ist. Weitere Verbesserungen in dieser Hinsicht werden dadurch erreicht, dass das Trägerteil im Bereich des Öffnungsrandes der Durchlassöffnung als Flansch für das Airbagmodul ausgebildet ist, und dass das Airbagmodul über vorzugsweise lösbare Verbindungsmittel wie Schrauben oder Clipse an dem Flansch gehaltert ist.

Eine Ausführung in besonders kompakter Bauform sieht vor, dass das Verschlussteil zugleich eine gegen den Gassack anliegende und diesen somit in Entfaltungsrichtung überdeckende Abdeckung für das Airbagmodul bildet. Für eine zusätzliche Erhöhung der Strukturfestigkeit ist es günstig, wenn das Verschlussteil an seiner von der Zwischenschicht abgewandten Rückseite zumindest bereichsweise an einem Gehäuseteil des Airbagmoduls flächig abgestützt ist.

Um neben vorteilhaften Funktionseigenschaften auch eine geringe Bautiefe zu erreichen, ist es von Vorteil, wenn der Gassack im gefalteten Zustand eine einzelne, an den lichten Querschnitt der Durchlassöffnung angepasste Decklage und einen randseitig daran anschließenden, vorzugsweise ringförmig umlaufenden Faltwulst aufweist. Entsprechend sollte das Airbagmodul eine Ringwanne zur Aufnahme des Gassacks aufweisen, wobei sich das Verschlussteil rückseitig unter Überbrückung der Ringwannenöffnung auf einer Zentralplatte der Ringwanne abstützen lässt.

Eine weitere vorteilhafte Ausführung sieht vor, dass das Verschlussteil gegen von dem Innenraum her einwirkende Belastungen an dem Öffnungsrand über einen Formschluss umlaufend abgestützt ist. Zugleich lassen sich damit geringe Öffnungskräfte für die Entfaltung des Airbags erreichen. Das Verschlussteil kann vorteilhafterweise über einen umlaufenden Randfalz oder einen hintergreifenden Formschluss mit dem Öffnungsrand in Eingriff stehen. Dabei ist es günstig, wenn das Verschlussteil im Bereich der Durchlassöffnung eine vorzugsweise flächenbündig an das Trägerteil anschließende Widerlagerfläche für die Zwischenschicht bildet.

Vorteilhafterweise ist das Verschlussteil unter dem Entfaltungsdruck des Gassacks im Verbund mit der Zwischenschicht von der Durchlassöffnung weg in Richtung des Fahrzeuginnenraums abklappbar. Um eine Gefährdung der Fahrzeuginsassen zu verhindern, sollte das Verschlussteil über eine Stoffschlussverbindung zumindest stellenweise fest mit der Zwischenschicht verbunden sein. Denkbar ist es auch, dass das Verschlussteil über eine Primerschicht mit der Zwischenschicht verklebt ist, und dass die mit der Zwischenschicht verbundene Oberfläche des Verschlussteils durch Erhöhungen und/oder Vertiefungen vergrößert ist. Gegebenenfalls kann das Verschlussteil mit unter Belastung durch den Gassack abknickenden Schwächungsstellen versehen sein.

Eine weitere vorteilhafte Ausführung sieht vor, dass im Bereich der Durchlassöffnung eine Aufreißperforation durch das Verschlussteil hindurch in die Zwischenschicht eingebracht ist. Die Perforation kann auf diese Weise ohne Beeinträchtigung des Airbags oder nennenswerte Reduzierung der Bauteilstabilität vorgenommen werden. Der Verlauf der Schwächungslinie kann im Bereich des Verschlussteils unabhängig von dessen randseitigem Anschluss weitgehend beliebig gewählt werden, und es ist im Auslösefall kein Materialbruch im Trägerteil erforderlich. Eine weitere Verbesserung wird dadurch erreicht, dass die Dekorhaut eine mit der Aufreißperforation der Zwischenschicht fluchtende rückseitige Hautschwächung aufweist. Zur Bildung eines klappenartigen Aufreißbereichs kann die Aufreißperforation und/oder die Hautschwächung U- oder H-förmig verlaufen.

Um die durch den Gassack bewegte Masse zu reduzieren, sollte das Verschlussteil aus einem Kunststoff mit einer Dichte von 0,05 bis 0,5 g/cm³, vorzugsweise bis 0,2 g/cm³ bestehen. Eine weitere Verbesserung sieht vor, dass das Verschlussteil als gegebenenfalls weichelastisches Schaumformteil ausgebildet ist und insbesondere aus Partikelschaum-Kunststoff, wie expandierbarem Polypropylen, oder aus Polyurethan-Schaumstoff oder aus Polymethacrylimid(PMI)-Schaumstoff besteht. Eine weitere vorteilhafte Variante sieht vor, dass das Verschlussteil eine Wandstärke im Bereich von 3 mm bis 10 mm aufweist.

In verfahrensmäßiger Hinsicht wird die eingangs genannte Aufgabe erfindungsgemäß dadurch gelöst, dass eine in das Trägerteil eingebrachte Durchlassöffnung für den Gassack des Airbagmoduls durch ein vorgefertigtes Verschlussteil gegenüber dem auszuschäumenden Hohlraum des Schäumwerkzeugs abgedeckt wird. Weitere vorteilhafte Maßnahmen sehen vor, dass das Verschlussteil als Schaumformteil vorzugsweise aus einem Partikelschaum-Kunststoff oder Polyurethan-Schaumstoff oder Polymethacrylimid(PMI)-Schaumstoff vorgefertigt wird, und dass die Zwischenschicht während des Schäumvorgangs in dem Schäumwerkzeug klebend an das Verschlussteil angeschäumt wird.

Um die Herstellung einer Aufreißpartie zu vereinfachen, sieht eine bevorzugte Ausgestaltung vor, dass die Zwischenschicht von der Rückseite des Trägerteils her im lichten Querschnittsbereich der Durchlassöffnung durch das Verschlussteil hindurch mit einer Aufreißperforation versehen wird. Dabei kann die linienförmig verlaufende Aufreißperforation durch das Verschlussteil hindurch eingeschnitten oder eingefräst werden.

Eine weitere Optimierung des Fertigungsprozesses wird dadurch erreicht, dass das Airbagmodul als komplette Baueinheit rückseitig an das Trägerteil des fertiggestellten Innenausstattungsteils angeflanscht wird.

Im Folgenden wird die Erfindung anhand eines in der Zeichnung in schematischer Weise dargestellten Ausführungsbeispiels näher erläutert. Es zeigen
- Fig. 1: eine mit einem Beifahrerairbag versehene Kraftfahrzeug-Instrumententafel in einem beifahrerseitigen Ausschnitt in schaubildlicher ausschnittsweises Darstellung von der Innenraumseite; und
- Fig. 2: einen abgebrochenen Querschnitt durch die Instrumententafel mit rückseitig angeflanschtem Beifahrerairbag entlang der Schnittlinie 2-2 der Fig. 1.

Die in der Zeichnung dargestellte Anordnung besteht im wesentlichen aus einer ein rückseitiges formsteifes Trägerteil 10, eine sichtseitige Dekorhaut 12 und eine dazwischenliegende geschäumte Zwischenschicht 14 umfassenden Instrumententafel 16 als Innenausstattungsteil eines Kraftfahrzeugs und einem an der Rückseite 18 des Trägerteils 10 vom Innenraum 20 aus unsichtbar angeordneten Airbagmodul 22, welches ein Gehäuse 24, einen Gasgenerator 26 und einen damit aufblasbaren gefalteten Gassack 28 umfasst.

Das im Spritzgussverfahren aus einem schlagzähen Kunststoff (beispielsweise glasfaserverstärktem Polycarbonat) hergestellte Trägerteil 10 ist mit einer Durchlassöffnung 30 für den Gassack 28 versehen. Diese ist durch ein gesondert vorgefertigtes Verschluss- bzw. Deckelteil 32 gegenüber der Zwischenschicht 14 abgedeckt. Dabei steht das Verschlussteil 32 über einen umlaufenden Randfalz 34 mit dem die Durchlassöffnung 30 umgebenden Öffnungsrand 36 des Trägerteils 10 in Eingriff, so dass das Verschlussteil gegen innenraumseitige Belastungen abgestützt ist. Denkbar ist auch eine hintergreifende Formschlussverbindung beispielsweise über eine Ringnut.

Das Verschlussteil 32 besteht aus einem Kunststoff von geringer Dichte und ist vorzugsweise als Schaumformteil aus einem Partikelschaum-Kunststoff, insbesondere expandierbarem Polypropylen oder aus Poiyurethan-Schaumstoff oder aus Polymethacrylimid(PMI)-Schaumstoff gebildet.

An seiner von dem Airbagmodul 22 abgewandten Vorderseite ist das Verschlussteil 32 stoffschlüssig mit der Zwischenschicht 14 verbunden. Die Verbindungsfläche 40 bildet dabei eine flächenbündig an die Vorderseite 42 des Trägerteils 10 anschließende Widerlagerfläche für die Zwischenschicht 14 und die sichtseitig damit verbundene Dekorhaut 12. Um die Verbindung zu verbessern, ist die Verbindungsfläche 40 mit in die angeschäumte Zwischenschicht 14 ragenden Erhöhungen 44 versehen.

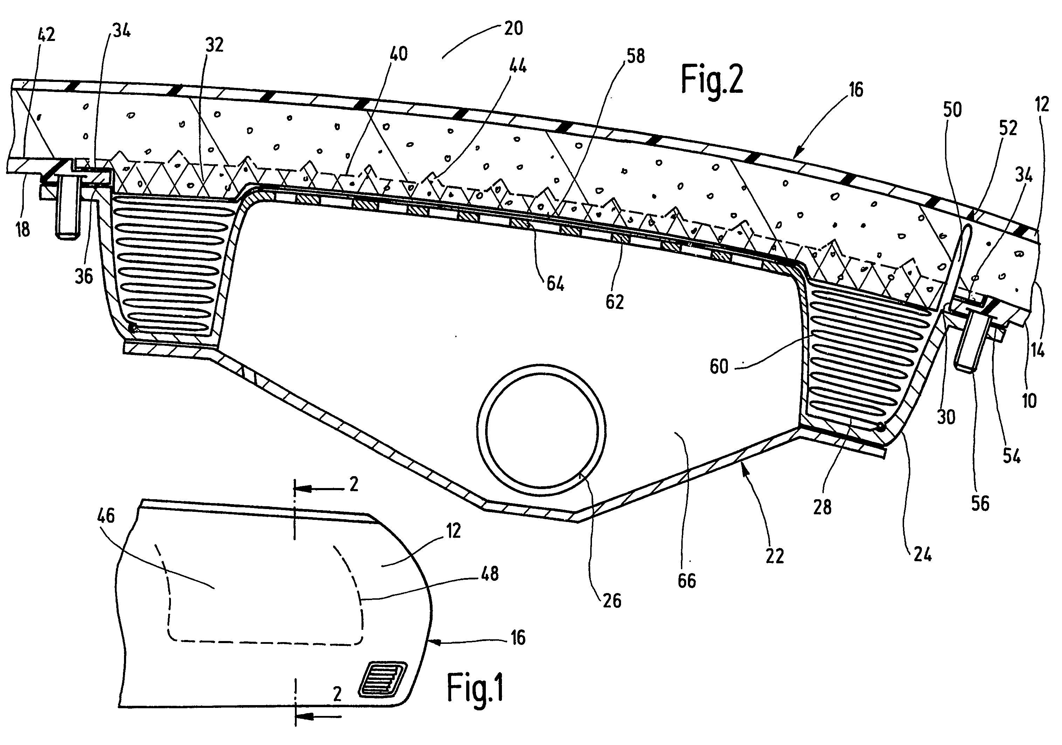

Im Auslösefall wird unter dem Entfaltungsdruck des Gassacks 28 eine über der Durchlassöffnung 30 liegende Aufreißpartie 46 der Instrumententafel 16 klappenartig aufgerissen (Fig. 1). Die Aufreißpartie 46 ist durch eine U-förmige Schwächungslinie 48 definiert. Entlang dieser Schwächungslinie 48 verläuft eine Aufreißperforation 50, die im Randbereich der Durchlassöffnung 30 durch das Verschlussteil 32 hindurch in die Zwischenschicht 14 eingebracht ist. Entsprechend weist die Dekorhaut 12 eine mit der Aufreißperforation 50 in Aufklapprichtung fluchtende rückseitige Hautschwächungslinie 52 auf. Um die Funktionssicherheit zu erhöhen, kann das Verschlussteil mit weiteren, unter Belastungen durch den Gassack 28 knickenden Schwächungsstellen versehen sein (nicht gezeigt).

Das Airbagmodul 22 lässt sich als komplette Baueinheit rückseitig an dem Trägerteil 10 der gesondert hergestellten Instrumententafel 16 anbringen. Zu diesem Zweck weist das Trägerteil 10 einen zugleich den Öffnungsrand 36 der Durchlassöffnung 30 bildenden ringförmigen Montageflansch 54 auf. Daran ist über Schraubverbindungen 56 das Gehäuse 24 des Airbagmoduls 22 zweckmäßig austauschbar gehaltert.

Um ein großes Entfaltungsvolumen bei möglichst geringer Entfaltungsgeschwindigkeit zu erreichen, besitzt der Gassack 28 eine einzelne, größenmäßig an den lichten Querschnitt der Durchlassöffnung 30 angepasste Decklage 58 und einen randseitig daran anschließenden Ringfaltwulst 60. Zu dessen Aufnahme ist das Gehäuse 24 formkomplementär als Ringwanne ausgebildet. Dabei stützt eine von der Decklage 58 überspannte Zentralplatte 62 der Ringwanne 24 das Verschlussteil 32 zentral ab, so dass nur der offene Ringwannenbereich von dem Verschlussteil 32 frei überbrückt wird. Die Zentralplatte 62 ist mit einer Vielzahl von Ausblasöffnungen 64 versehen, durch welche das im Gasgenerator 26 erzeugte und über den Innenraum 66 verteilte Gas großflächig hindurchströmt.

Die vorstehend beschriebene, prinzipiell auch bei anderen Innenausstattungsteilen in Fahrzeugen denkbare Anordnung bietet neben einer raumsparenden kompakten Bauform die Möglichkeit zu einer einfachen und wirtschaftlichen Herstellung. Dabei wird die Dekorhaut 12 in an sich bekannter Weise im Pulversinterverfahren aus einem geeigneten Kunststoffpulver geformt. Anschließend lässt sich die Hautschwächungslinie 52 mit einer Schneidvorrichtung rückseitig in die Formhaut 12 so einschneiden, dass sichtseitig keine Veränderungen erkennbar sind.

Das Trägerteil 10 und das Verschlussteil 32 werden in gesonderten Arbeitsgängen entsprechend der gewünschten räumlichen Kontur der Instrumententafel 10 gefertigt.

Sodann lässt sich die Formhaut durch Einschäumen der beispielsweise aus Polyurethanschaum gebildeten Zwischenschicht 14 auf das Trägerteil 10 aufbringen.

Hierzu wird das Verschlussteil 32 in die Durchlassöffnung 30 des Trägerteils 10 eingesetzt und in eine Formhälfte eines Schäumwerkzeugs eingelegt. Wichtig dabei ist ein allseitig bündiger Konturanschiuss bzw. Übergang zwischen dem Verschlussteil und dem Trägerteil. Die Dekorhaut 12 wird in die andere Formhälfte eingelegt, und der zwischen den Formwänden freigehaltene Werkzeughohlraum wird bei geschlossenen Formhälften ausgeschäumt. Beim Schäumvorgang wird die Zwischenschicht 14 vollflächig klebend mit der Dekorhaut 12 einerseits und mit der durch das Trägerteil 10 und das Verschlussteil 32 gebildeten Stützfläche 40, 42 andererseits fest verbunden.

Die Instrumententafel 16 lässt sich nach der Entnahme aus dem Schäumwerkzeug mit der zu der Hautschwächungslinie 52 korrespondierenden Aufreißperforation 50 versehen. Zu diesem Zweck wird die Zwischenschicht von der Rückseite 18 des Trägerteils 10 her im Querschnittsbereich der Durchlassöffnung 30 durch das Verschlussteil 32 hindurch eingefräst oder eingeschnitten.

An der solchermaßen fertiggestellten Instrumententafel 16 lässt sich das Airbagmodul 22 als komplett geprüfte Baueinheit gegebenenfalls sogar erst im Zuge der Fahrzeugendmontage anflanschen, wobei auch ein späterer Austausch im Reparaturfall auf einfache Weise möglich ist.

Im Auslösefall entfaltet sich der Gassack 28 über die gesamte Fläche seiner Decklage 58, wobei das rückseitig beaufschlagte Verschlussteil 32 im Verbund mit der Zwischenschicht 14 und der Dekorhaut 12 im Bereich der Aufreißpartie 46 nach oben wegklappt und so eine Auslassöffnung für den Gassack in Richtung des Fahrgastraums 20 freigibt. Dabei ist durch die geringe Dichte des aus einem Schaumstoff bestehenden Verschlussteils 32 gewährleistet, dass die Sicherheit der Fahrzeuginsassen im Auslösefall nicht durch schwere umherfliegende Verkleidungsteile gefährdet wird.

## Patentansprüche

1. Anordnung zur Innenausstattung eines Kraftfahrzeugs, insbesondere mit einem Beifahrerairbagmodul versehene Instrumententafel, mit einem aus einem rückseitigen formstelfen Trägerteil (10), einer vorderseitigen zum Innenraum (20) des Kraftfahrzeugs weisenden Dekorhaut (12) und einer zwischen Dekorhaut (12) und Trägerteil (10) liegenden, vorzugsweise geschäumten Zwischenschicht (14) bestehenden Innenausstattungsteil (16) und einem hinter dem Innenausstattungsteil verdeckt angeordneten, einen Gasgenerator (26) und einen damit aufblasbaren gefalteten Gassack (28) umfassenden Airbagmodul (22), wobei das Trägerteil (10) eine Durchlassöffnung (30) für den Gassack (28) aufweist und die Durchlassöffnung (30) durch ein an dem Öffnungsrand (36) abgestütztes vorgefertigtes Verschlussteil (32) gegenüber der Zwischenschicht (14) abgedeckt ist, **dadurch gekennzeichnet, dass** im lichten Querschnittsbereich der Durchlassöffnung (30) eine Aufreißperforation (50) durch das Verschlussteil (32) hindurch in die Zwischenschicht (14) eingebracht ist.

2. Anordnung nach Anspruch 1, **dadurch gekennzeichnet, dass** das Airbagmodul (22) als komplette Baueinheit an dem Trägerteil (10) des vorgefertigten Innenausstattungsteils (16) angeflanscht ist.

3. Anordnung nach Anspruch 1 oder 2, **dadurch gekennzeichnet, dass** das Trägerteil (10) im Bereich des Öffnungsrandes (36) der Durchlassöffnung (30) als Flansch (54) für das Airbagmodul (22) ausgebildet ist.

4. Anordnung nach Anspruch 3, **dadurch gekennzeichnet, dass** das Airbagmodul (22) über vorzugsweise lösbare Verbindungsmittel (56) wie Schrauben oder Clipse an dem Flansch (54) gehaltert ist.

5. Anordnung nach einem der Ansprüche 1 bis 4, **dadurch gekennzeichnet, dass** das Verschlussteil (32) zugleich eine gegen den Gassack (28) anliegende Abdeckung für das Airbagmodul (22) bildet.

6. Anordnung nach einem der Ansprüche 1 bis 5, **dadurch gekennzeichnet, dass** das Verschlussteil (32) an seiner von der Zwischenschicht (14) abgewandten Rückseite zumindest bereichsweise an einem Gehäuseteil (62) des Airbagmoduls (22) flächig abgestützt ist.

7. Anordnung nach einem der Ansprüche 1 bis 6, **dadurch gekennzeichnet, dass** der Gassack (28) im gefalteten Zustand eine einzelne, an den lichten Querschnitt der Durchlassöffnung (30) angepasste Decklage (58) und einen randseitig daran anschließenden, vorzugsweise ringförmig umlaufenden Faltwulst (60) aufweist.

8. Anordnung nach einem der Ansprüche 1 bis 7, **dadurch gekennzeichnet, dass** das Airbagmodul (22) eine Ringwanne (24) zur Aufnahme des Gassacks (28) aufweist, und dass das Verschlussteil (32) rückseitig unter Überbrückung der Ringwannenöffnung auf einer Zentralplatte (62) der Ringwanne (24) aufliegt.

9. Anordnung nach einem der Ansprüche 1 bis 8, **dadurch gekennzeichnet, dass** das Verschlussteil (32) gegen von dem Innenraum (20) her einwirkende Belastungen an dem Öffnungsrand (36) formschlüssig umlaufend abgestützt ist.

10. Anordnung nach einem der Ansprüche 1 bis 9, **dadurch gekennzeichnet, dass** das Verschtussteil (32) über einen umlaufenden Randfalz (34) oder einen hintergreifenden Formschluss mit dem Öffnungsrand (36) in Eingriff steht.

11. Anordnung nach einem der Ansprüche 1 bis 10, **dadurch gekennzeichnet, dass** das Verschlussteil (32) im Bereich der Durchlassöffnung (30) eine vorzugsweise flächenbündig an das Trägerteil (10) anschlleßende Widerlagerfläche (40) für die Zwischenschicht (14) bildet.

12. Anordnung nach einem der Ansprüche 1 bis 11, **dadurch gekennzeichnet, dass** das Verschlussteil (32) unter dem Entfaltungsdruck des Gassacks (28) im Verbund mit der Zwischenschicht (14) von der Durchlassöffnung (30) weg in Richtung des Innenraums (20) abklappbar ist.

13. Anordnung nach einem der Ansprüche 1 bis 12, **dadurch gekennzeichnet, dass** das Verschlussteil (32) über eine Stoffschlussverbindung zumindest stellenweise fest mit der Zwischenschicht (14) verbunden ist.

14. Anordnung nach einem der Ansprüche 1 bis 13, **dadurch gekennzeichnet, dass** das Verschlussteil (32) über eine Primerschicht mit der Zwischenschicht (14) verklebt ist.

15. Anordnung nach einem der Ansprüche 1 bis 14, **dadurch gekennzeichnet, dass** die mit der Zwischenschicht (14) verbundene Oberfläche des Verschlussteils (32) durch Erhöhungen (44) und/oder Vertiefungen vergrößert ist.

16. Anordnung nach einem der Ansprüche 1 bis 15, **dadurch gekennzeichnet, dass** das Verschlussteil (32) mit unter Belastung durch den Gassack (28) abknickenden Schwächungsstelien versehen ist.

17. Anordnung nach einem der Ansprüche 1 bis 16, **dadurch gekennzeichnet, dass** die Dekorhaut (12) eine mit der Aufreißperforation (50) der Zwischenschicht (14) fluchtende rückseitige Hautschwächung (52) aufweist.

18. Anordnung nach einem der Ansprüche 1 bis 17, **dadurch gekennzeichnet, dass** die Aufreißperforation (50) und/oder die Hautschwächung (52) zur Bildung eines klappenartigen Aufreißbereichs (46) U-oder H-förmig verläuft.

19. Anordnung nach einem der Ansprüche 1 bis 18, **dadurch gekennzeichnet, dass** das Verschlussteil (32) aus einem Kunststoff mit einer Dichte von 0,05 bis 0,5 g/cm³, vorzugsweise von 0,05 bis 0,2 g/cm³ besteht.

20. Anordnung nach einem der Ansprüche 1 bis 19, **dadurch gekennzeichnet, dass** das Verschlussteil (32) als gegebenenfalls weichalastisches Schaumformteil ausgebildet ist.

21. Anordnung nach einem der Ansprüche 1 bis 20, **dadurch gekennzeichnet, dass** das Verschlussteil (32) aus Partikelschaum-Kunststoff, Insbesondere expandierbarem Polypropylen oder aus Polyurethan-Schaumstoff oder aus Polymethacrylimid(PMI)-Schaumstoff besteht.

22. Anordnung nach einem der Ansprüche 1 bis 21, **dadurch gekennzeichnet, dass** das Verschlusstell (32) eine Wandstärke im Bereich von 3 mm bis 10 mm aufweist.

23. Verfahren zur Herstellung eines mit einem Airbagmodul (22) versehenen Innenausstattungsteils (16) eines Kraftfahrzeugs, insbesondere einer mit einem Beifahrerairbagmodul versehenen Instrumententafel, bei welchem ein formsteifes Trägerteil (10) und eine Dekorhaut (12) in einem Schäumwerkzeug über eine eingeschäumte Zwischenschicht (14) als Innenausstattungsteil (16) fest miteinander verbunden werden, wobei eine in das Trägerteil (10) eingebrachte Durchlassöffnung (30) für den Gassack (28) des Airbagmoduls (22) durch ein vorgefertigtes Verschlussteil (32) gegenüber dem auszuschäumenden Hohlraum des Schäumwerkzeugs abgedeckt wird, **dadurch gekennzeichnet, dass** die Zwischenschicht (14) von der Rückseite des Trägerteils (10) her im lichten Querschnittsbereich der Durchlassöffnung (30) durch das Verschlussteil (32) hindurch mit einer Aufreißperforation (50) versehen wird.

24. Verfahren nach Anspruch 23, **dadurch gekennzeichnet, dass** das Verschlussteil (32) als Schaumformteil vorzugsweise aus einem Partikelschaum-Kunststoff, Polyurethan-Schaumstoff oder Polymethacrylimid(PMI)-Schaumstoff vorgefertigt wird.

25. Verfahren nach Anspruch 23 oder 24, **dadurch gekennzeichnet, dass** die Zwischenschicht (14) während des Schäumvorgangs in dem Schäumwerkzeug klebend an das Verschlussteil (32) angeschäumt wird.

26. Verfahren nach einem der Ansprüche 23 bis 25, **dadurch gekennzeichnet, dass** die linienförmig verlaufende Aufreißperforation (50) durch das Verschtussteil (32) hindurch eingeschnitten oder eingefräst wird.

27. Verfahren nach einem der Ansprüche 23 bis 26, **dadurch gekennzeichnet, dass** das Airbagmodul (22) als komplette Baueinheit rückseitig an das Trägerteil (10) des fertiggestellten Innenausstattungsteils (16) angeflanscht wird.

## Claims

1. An arrangement for equipping the interior of a motor vehide, in particular, equipping it with an instrument panel that is provided with a passenger-airbag module, having a component (16) consisting of a rigid carrier (10) on its rear, a decorative skin (12) facing the interior (20) of the motor vehicle on its front, and a, preferably foamed, intermediate ply (14) situated between the decorative skin (12) and the carrier (10), and an airbag module (22) comprising a gas generator (26) and a folded gas bag (28) that may be inflated by the former concealed behind the component, where the carrier (10) has a through hole (30) for accommodating the gas bag (28) and that side of the through hole (30) facing the intermediate ply (14) is covered by a prefabricated blanking component (32) abutting against the rim (36) of the hole, wherein a rupturing perforation (50) extending through the blanking component (32) and into the intermediate ply (14) is incorporated into the component, in the vicinity of the clear aperture of the through hole (30).

2. An arrangement according to claim 1, wherein the airbag module (22) is flanged onto the carrier (10) of the prefabricated component (16) in the form of a fully assembled structural unit.

3. An arrangement according to claim 1 or claim 2, wherein that section of the carrier (10) in the vicinity of the rim (36) of the through hole (30) is configured in the form of a flange (54) for accommodating the airbag module (22)

4. An arrangement according to claim 3, wherein the airbag module (22) is held in place on the flange (54) by, preferably removable, fasteners (56), such as screws or dips.

5. An arrangement according to any of claims 1 - 4, wherein the blanking component (32) also forms a cover for the airbag module (22) that abuts against the gas bag (28).

6. An arrangement according to any of claims 1 - 5, wherein the back of the blanking component (32), i.e., that side thereof that faces away from the intermediate ply (14), abuts against a component (62) of the housing of the airbag module (22) at at least isolated locations thereon.

7. An arrangement according to any of claims 1 - 6, wherein, in the folded state, the gas bag (28) has a single cover ply (58) tailored to match the clear aperture of the through hole (30) and, preferably annular, pleats (60) extending around the interior of the rim of the latter.

8. An arrangement according to any of claims 1 - 7, wherein the airbag module (22) has an annular well (24) for accommodating the gas bag (28) and the back of the blanking component (32) abuts against a boss (62) in the center of the annular well (24) and extends across the full width of the well.

9. An arrangement according to any of claims 1 - 8, wherein the blanking component (32) abuts against the rim (36) of the hole all around the perimeter of the latter in order to allow it to withstand forces exerted thereon coming from the interior of the passenger compartment (20).

10. An arrangement according to any of claims 1 - 9, wherein a raised edge (34) or channel extending around the perimeter of the blanking component (32) engages the rim (36) of the hole.

11. An arrangement according to any of claims 1 - 10, wherein the blanking component (32) forms a mating surface for the intermediate ply (14) in the vicinity of the through hole (30), preferably one that is immediately adjacent to the carrier (10) and in contact therewith over its entire surface area.

12. An arrangement according to any of claims 1 - 11, wherein the blanking component (32), together with the intermediate ply (14), may be flicked out of the through hole (30), toward the interior of the passenger compartment, by the pressure exerted by the unfolding of the gas bag (28).

13. An arrangement according to any of claims 1 - 12, wherein the blanking component (32) is firmly joined to the intermediate ply (14) at at least isolated locations thereon.

14. An arrangement according to any of claims 1 - 13, wherein a primer coat (14) joins the blanking component (32) to the intermediate ply (14).

15. An arrangement according to any of claims 1 - 14, wherein the surface area of that side of the blanking component (32) that is joined to the intermediate ply (14) is increased by adding protrusions (44) and/or recesses.

16. An arrangement according to any of daims 1 - 15, wherein the blanking component (32) is provided with weakened spots that rupture when struck by the gas bag (28).

17. An arrangement according to any of claims 1 - 16, wherein the decorative skin (12) has a weakened section (52) on its underside that coincides with the rupturing perforation (50) on the intermediate ply (14).

18. An arrangement according to any of claims 1 - 17, wherein the rupturing perforation (50) and/or weakened section (52) of the skin is/are U-shaped or H-shaped in order to provide that it/they form a trapdoor-shaped area (46) bounded by perforations.

19. An arrangement according to any of claims 1 - 18, wherein the blanking component (32) consists of a plastic having a mass density falling within the range 0.05 g/cm³- 0.5 g/cm³, and preferably falling within the range 0.05 g/cm³- 0.2 g/cm³.

20. An arrangement according to any of claims 1 - 19, wherein, if deemed necessary, the blanking component (32) is configured in the form of a molded, soft, elastic, foam part.

21. An arrangement according to any of claims 1 - 20, wherein the blanking component (32) consists of particle-foam plastic, in particular, expandable polypropylene, or of polyurethane foam, or of polymethacrylimide (PMI) foam.

22. An arrangement according to any of claims 1 - 21, wherein the blanking component (32) has a wall thickness falling within the range 3 mm- 10 mm.

23. A method for manufacturing a component (16) of the equipment of a motor-vehicle interior that is provided with an airbag module (22), in particular, an instrument panel equipped with a passenger-airbag module, under which a rigid carrier (10) and a decorative skin (12) are firmly joined together by a foamed-in intermediate ply (14) in a foaming die, where that side of a through hole (30) incorporated into the carrier (10) for the purpose of accommodating the gas bag (28) of the airbag module (22) that is situated opposite that cavity of the foaming die that is to be foamed out is covered by a prefabricated blanking component (32), wherein the intermediate ply (14) is provided with a rupturing perforation (50) in the vicinity of the clear aperture of the through hole (30) that commences on the back of the carrier (10) and passes through the blanking component (32).

24. A method according to claim 23, wherein the blanking component (32) is prefabricated in the form of a molded foam component, preferably from a particle-foam plastic, polyurethane foam, or polymethacrylimide (PMI) foam

25. A method according to claim 23 or claim 24, wherein the intermediate ply (14) is foamed onto the blanking component (32) in the foaming die during the foaming process and adheres thereto.

26. A method according to any of claims 23 - 25, wherein the linear pattem(s) of rupturing perforations (50) is/are cut or milled into the blanking component (32) and extend(s) through the latter.

27. A method according to any of daims 23 - 26, wherein the airbag module (22) is flanged onto the back of the carrier (10) of the finished component (16) in the form of a fully assembled structural unit.

## Revendications

1. Dispositif pour l'équipement intérieur d'un véhicule automobile, notamment avec un tableau de bord pourvu d'un module d'airbag pour passager, avec une pièce de support (10) constituée d'une forme rigide du côté arrière, avec une enveloppe décorative (12) du côté avant, orientée vers l'espace intérieur (20) du véhicule automobile et avec une pièce d'équipement intérieur (16) composée d'une couche intermédiaire (14) de préférence en mousse située entre l'enveloppe décorative (12) et la pièce de support (10), et un générateur de gaz (26) disposé de façon cachée derrière la pièce d'équipement intérieur et un module d'airbag (22) comportant un sac à gaz (28) plié susceptible d'être gonflé au moyen dudit générateur, la pièce de support (10) présentant une ouverture de passage (30) pour le sac à gaz (28) et l'ouverture de passage (30) étant recouverte par rapport à la couche intermédiaire par une pièce de fermeture (32) préfabriquée s'appuyant sur le bord de l'ouverture (36) (14), **caractérisé en ce que** dans la zone transversale intérieure de l'ouverture de passage, on introduit une perforation de déchirement (50) à travers la pièce de fermeture (32) dans la couche intermédiaire (14).

2. Dispositif selon la revendication 1, **caractérisé en ce que** le module d'airbag (22) est fixé par un flasque en tant qu'unité de construction complète sur la pièce de support (10) de la pièce d'équipement intérieur (16) préfabriquée.

3. Dispositif selon la revendication 1 ou 2, **caractérisé en ce que** la pièce de support (10) est formée dans la zone du bord de l'ouverture (36) de l'ouverture de passage (30) en tant que flasque (54) pour le module d'airbag (22).

4. Dispositif selon la revendication 3, **caractérisé en ce que** le module d'airbag (22) est maintenu de préférence par des moyens de liaison (56) mobiles comme des vis ou des clips sur le flasque (54).

5. Dispositif selon une des revendications 1 à 4, **caractérisé en ce que** la pièce de fermeture (32) forme en même temps un recouvrement pour le module d'air bag (22) s'appuyant contre le sac à gaz (28).

6. Dispositif selon une des revendications 1 à 5, **caractérisé en ce que** la pièce de fermeture (32) s'appuie de façon deux dimensionnelle sur son côté arrière détourné de la couche intermédiaire (14) au moins par zones sur une pièce de boîtier (52) du module d'air bag (22).

7. Dispositif selon une des revendications 1 à 6, **caractérisé en ce que** le sac à gaz présente à l'état plié une seule couche supérieure (58) adaptée à la section transversale intérieure de l'ouverture de passage (30) et présente un bourrelet (60) plié, de préférence annulaire, circonférentielle adjacent à ladite couche du côté du bord.

8. Dispositif selon une des revendications 1 à 7, **caractérisé en ce que** le module (22) d'air bag présente un bac annulaire (24) pour recevoir le sac à gaz (28) et **en ce que** la pièce de fermeture (32) s'appuie du côté arrière en surplombant l'ouverture du bac annulaire sur une plaque centrale (62) du bac annulaire (24).

9. Dispositif selon une des revendications 1 à 8, **caractérisé en ce que** la pièce de fermeture (32) s'appuie de façon complémentaire et circonférentielle sur le bord d'ouverture (36) contre des forces s'exerçant depuis l'espace intérieure (20).

10. Dispositif selon une des revendications 1 à 9, **caractérisé en ce que** la pièce de fermeture (32) s'engrène via un pli de bord circonférentiel (34) ou une complémentarité de forme saisissant le bord d'ouverture (36).

11. Dispositif selon une des revendications 1 à 10, **caractérisé en ce que** la pièce de fermeture (32) forme dans la zone de l'ouverture de passage (30) une surface de butée (40) pour la couche intermédiaire (14) raccordée de préférence à affleurer en surface de la pièce de support (10).

12. Dispositif selon une des revendications 1 à 11, **caractérisé en ce que** la pièce de fermeture (32) est dépliable sous l'influence de la pression de dépliage du sac à gaz (28) lié avec la couche intermédiaire (14) en direction opposée de l'ouverture de passage (30) en direction de l'espace intérieure (20).

13. Dispositif selon une des revendications 1 à 12, **caractérisé en ce que** la pièce de fermeture (32) est liée au moins à certains endroits par une liaison de matière de façon stable avec la couche intermédiaire (14).

14. Dispositif selon une des revendications 1 à 13, **caractérisé en ce que** la pièce de fermeture (32) est collée par une couche primaire avec la couche intermédiaire.

15. Dispositif selon une des revendications 1 à 14, **caractérisé en ce que** la surface de la pièce de fermeture (32) liée avec la couche intermédiaire (14) est augmentée par des élévations (44) et / ou des enfoncements.

16. Dispositif selon une des revendications 1 à 15, **caractérisé en ce que** la surface de la pièce de fermeture (32) est pourvue d'endroits d'affaiblissement se pliant sous la force du sac à gaz (28).

17. Dispositif selon une des revendications 1 à 16, **caractérisé en ce que** l'enveloppe décorative (12) présente un affaiblissement de l'enveloppe (52) du côté arrière aligné avec la perforation de déchirement (50) de la couche intermédiaire (14).

18. Dispositif selon une des revendications 1 à 17, **caractérisé en ce que** la perforation de déchirement (50) et / ou l'affaiblissement de l'enveloppe (52) s'étendent en forme de U ou de H pour former une zone de déchirement (46) en forme de clapet.

19. Dispositif selon une des revendications 1 à 18, **caractérisé en ce que** la pièce de fermeture (32) est composée d'une matière plastique avec une densité entre 0,05 et 0,5 g/cm³, de préférence entre 0,05 et 0,2 g / cm³.

20. Dispositif selon une des revendications 1 à 19, **caractérisé en ce que** la pièce de fermeture (32) est éventuellement formée en tant que pièce moulée en mousse molle et élastique.

21. Dispositif selon une des revendications 1 à 20, **caractérisé en ce que** la pièce de fermeture (32) est constituée d'une matière plastique en mousse de particules, notamment en polypropylène expansible ou en mousse de polyuréthane ou en mousse de polyméthacrylimide (PMI).

22. Dispositif selon une des revendications 1 à 21, **caractérisé en ce que** la pièce de fermeture (32) présente une épaisseur de paroi dans une zone entre 3 mm et 10 mm.

23. Procédé pour la fabrication d'une d'équipement intérieur (16) d'un véhicule automobile, notamment avec un tableau de bord pourvu d'un module d'airbag (22) pour passager, dans laquelle pièce d'équipement une pièce de support (10) et une enveloppe décorative (12) sont liées entre elles de façon fixe dans un outil de moussage via une couche intermédiaire en mousse (14) en tant que pièce d'équipement intérieur (16), une ouverture de passage (30) incrustée pour le sac à gaz (28) et le module d'air bag (22) étant couvert par une pièce de fermeture préfabriquée (32) par rapport au creux, devant être rempli par de la mousse, de l'outil de moussage, **caractérisé en ce que** la couche intermédiaire (14) est pourvue de l'arrière de la pièce de support (10) dans la zone intérieure de section transversale de l'ouverture de passage (30) à travers la perforation de déchirement (50).

24. Procédé selon la revendication 23, **caractérisé en ce que** la pièce de fermeture (32) est préfabriquée en tant que pièce moulée en mousse de préférence en matière plastique en mousse de particules, notamment en polypropylène expansible ou en mousse de polyuréthane ou en mousse de polyméthacrylimide (PMI).

25. Procédé selon la revendication 23 ou 24, **caractérisé en ce que** la couche intermédiaire (14) est collée à la pièce de fermeture (32) par moussage dans l'outil de moussage pendant le procédé de moussage.

26. Procédé selon une des revendications 23 à 25, **caractérisée en ce que** la perforation de déchirement (50) s'étendant sous forme de ligne est coupée ou fraisée à travers la pièce de fermeture (32).

27. Procédé selon une des revendications 23 à 26, **caractérisé en ce que** le module d'air bag (22) est fixé en tant qu'unité de construction complète par un flasque du côté arrière à la pièce de support (10) de la pièce d'équipement intérieur (16) terminé.
